# EUROPEAN PATENT APPLICATION

(11) **EP 4 752 121 A1**
(43) Date of publication of application: **03.06.2026**
(21) Application number: 25217671.4
(22) Date of filing: 21.11.2025
(51) Int. Cl.: C04B 35/653, C04B 35/80

(54) **PROCESSES FOR FABRICATING CERAMIC MATRIX COMPOSITES**

(30) Priority: 21.11.2024 US 202418955474
(71) Applicant: RTX Corporation, Farmington, CT 06032 (US)
(72) Inventor: BEALS, James T., West Hartford, 06107 (US); JACKSON III, Richard Wesley, Mystic, 06355 (US)
(74) Representative: Dehns

(57) **Abstract**

A process for melt-infiltrating a partially densified ceramic matrix composite, comprising the steps of: disposing in a chamber of a thermal processing apparatus a partially densified ceramic matrix composite comprising a ceramic matrix including at least silicon carbide and at least one oxide phase precursor; introducing at least one gas into the thermal processing apparatus; elevating a temperature of the chamber to cause a reaction between the silicon carbide and the least one gas; achieving a chemical equilibrium of the gases within the chamber; identifying a gas regime for minimizing the liberation of SiO and SiO₂; maintaining a temperature and CO₂:CO ratio of the identified gas regime within the chamber; and, melt-infiltrating the partially densified ceramic matrix composite with the at least one oxide phase precursor to form a molten oxide ceramic matrix composite comprising a matrix including a silicon carbide phase and an oxide phase.

## Description

### FIELD OF THE INVENTION

The subject matter disclosed herein relates to fabricating ceramic matrix composites and, in particular, to a melt-infiltration technique for fabricating ceramic matrix composites (CMC).

### BACKGROUND OF THE INVENTION

Presently, SiC/SiC CMCs can be currently manufactured in an all chemical vapor infiltration approach. This fabrication approach requires extensive time for the gas to infiltrate and densify the CMCs. As a result, the approach is rather expensive. In addition, the resultant SiC/SiC CMC often results in a porosity of 20%. A resultant SiC/SiC CMC having such a high amount of porosity may degrade, i.e., debit through its thickness, and negatively impact both mechanical and physical properties, much more quickly during sustained use. As an alternative, melt-infiltration techniques using silicon metal can fill the porosity observed in CMCs. However, certain melt-infiltration techniques limit the resultant CMC part's operating temperature to below 2,500°F due to the melting point of silicon. In addition, certain combinations of matrix phase materials and gas environments while performing melt-infiltration can cause large amounts of gases to be liberated even when inert environments, e.g., N, Ar, vacuum, are maintained. Like the observed porosity, these liberated gases can also degrade the resultant SiC/SiC CMC part.

Consequently, there is a need to improve the melt-infiltration techniques for fabricating ceramic matrix composites.

### SUMMARY OF THE INVENTION

The present disclosure is directed, in a first aspect, to a process for melt-infiltrating a partially densified ceramic matrix composite, comprising the steps of: disposing a partially densified ceramic matrix composite comprising a ceramic matrix including at least one oxide phase precursor within an opening of a vessel; disposing a mixture of silicon carbide and at least one of silicon dioxide or silicon within the opening to surround the partially densified ceramic matrix composite; sealing the vessel and capturing oxygen gas present within the vessel; disposing the sealed vessel in a chamber of a furnace; generating an inert atmosphere within the chamber; heating the chamber to a temperature proximate to or greater than a melting point of the at least one oxide phase precursor; liberating SiO gas within the sealed vessel; achieving an equilibrium vapor pressure of SiO gas within the sealed vessel; and, melt-infiltrating the partially densified ceramic matrix composite with the at least one oxide phase precursor to form a molten oxide ceramic matrix composite comprising a silicon carbide phase and an oxide phase.

In further examples of the present disclosure, including further examples of the above, the at least one oxide phase precursor comprises one or more of the following: B₂O₃-SiO₂; AEO-Al₂O₃-SiO₂, where AE comprises at least one of Be, Ca, Ba and Sr; REO-Al₂O₃-SiO₂, where RE comprises at least one of La, Ce, Pr, Nd, Pm, Sm, Eu, Gd, Tb, Dy, Ho, Er, Tm, Yb, Lu and Y; and, combinations thereof.

In further examples of the present disclosure, including further examples of the above, the oxide phase includes an oxide crystalline structure comprising at least two of the following oxides, alumino silicates or both oxides and alumino silicates: B₂O₃-SiO₂; alumino silicates of oxides of one or more of: Be, Ca, Ba, Sr, and combinations thereof; alumino silicates of oxides of one or more of: La, Ce, Pr, Nd, Pm, Sm, Eu, Gd, Tb, Dy, Ho, Er, Tm, Yb, Lu, Y, and combinations thereof; and, combinations thereof.

In further examples of the present disclosure, including further examples of the above, disposing the partially densified ceramic matrix composite further comprises enclosing the partially densified ceramic matrix composite within an enclosure prior to disposing the partially densified ceramic matrix composite within the opening.

In further examples of the present disclosure, including further examples of the above, disposing the partially densified ceramic matrix composite further comprises placing the partially densified ceramic matrix composite in contact with a fixture and disposing the partially densified ceramic matrix composite and the fixture within the opening.

In further examples of the present disclosure, including further examples of the above, the vessel comprises one or more of the following: graphite, aluminum oxide, silicon oxide, and combinations thereof.

In further examples of the present disclosure, including further examples of the above, generating the inert atmosphere comprises evacuating the chamber of the furnace to form a vacuum.

In further examples of the present disclosure, including further examples of the above, generating the inert atmosphere comprises filling the chamber with an inert gas.

In further examples of the present disclosure, including further examples of the above, generating the inert atmosphere comprises: evacuating the chamber to form a vacuum; and backfilling the chamber with an inert gas.

In another aspect, the present disclosure is directed to a process for melt-infiltrating a partially densified ceramic matrix composite, comprising the steps of: disposing in a chamber of a thermal processing apparatus a partially densified ceramic matrix composite comprising a ceramic matrix including at least silicon carbide and at least one oxide phase precursor; introducing at least one gas into the thermal processing apparatus; elevating a temperature of the chamber to cause a reaction between the silicon carbide and the least one gas; achieving a chemical equilibrium of the gases within the chamber; identifying a gas regime for minimizing the liberation of SiO and SiO₂; maintaining a temperature and CO₂:CO ratio of the identified gas regime within the chamber; and melt-infiltrating the partially densified ceramic matrix composite with the at least one oxide phase precursor to form a molten oxide ceramic matrix composite comprising a matrix including a silicon carbide phase and an oxide phase.

In further examples of the present disclosure, including further examples of the above, the at least one oxide phase precursor comprises one or more of the following: B₂O₃-SiO₂; AEO-Al₂O₃-SiO₂, where AE comprises at least one of Be, Ca, Ba and Sr; REO-Al₂O₃-SiO₂, where RE comprises at least one of La, Ce, Pr, Nd, Pm, Sm, Eu, Gd, Tb, Dy, Ho, Er, Tm, Yb, Lu and Y; and, combinations thereof.

In further examples of the present disclosure, including further examples of the above, the oxide phase includes an oxide crystalline structure comprising at least two of the following oxides, alumino silicates or both oxides and alumino silicates: B₂O₃-SiO₂; alumino silicates of oxides of one or more of: Be, Ca, Ba, Sr, and combinations thereof; alumino silicates of oxides of one or more of: La, Ce, Pr, Nd, Pm, Sm, Eu, Gd, Tb, Dy, Ho, Er, Tm, Yb, Lu, Y, and combinations thereof; and, combinations thereof.

In yet another aspect, which the Applicant expressly reserves the right to claim independently, the present disclosure is directed to a ceramic matrix composite fabricated according to a process comprising the following steps: disposing a partially densified ceramic matrix composite comprising a ceramic matrix including at least one oxide phase precursor within an opening of a vessel; disposing a mixture of silicon carbide and at least one of silicon dioxide or silicon within the opening to surround the partially densified ceramic matrix composite; sealing the vessel and capturing oxygen gas present within the vessel; disposing the sealed vessel in a chamber of a furnace; generating an inert atmosphere within the chamber; heating the chamber to a temperature proximate to or greater than a melting point of the at least one oxide phase precursor; liberating SiO gas within the sealed vessel; achieving an equilibrium vapor pressure of SiO gas within the sealed vessel; and, melt-infiltrating the partially densified ceramic matrix composite with the at least one oxide phase precursor to form a molten oxide ceramic matrix composite comprising a silicon carbide phase and an oxide phase.

In further examples of the present disclosure, including further examples of the above, the at least one oxide phase precursor comprises one or more of the following: B₂O₃-SiO₂; AEO-Al₂O₃-SiO₂, where AE comprises at least one of Be, Ca, Ba and Sr; REO-Al₂O₃-SiO₂, where RE comprises at least one of La, Ce, Pr, Nd, Pm, Sm, Eu, Gd, Tb, Dy, Ho, Er, Tm, Yb, Lu and Y; and, combinations thereof.

In further examples of the present disclosure, including further examples of the above, the oxide phase includes an oxide crystalline structure comprising at least two of the following oxides, alumino silicates or both oxides and alumino silicates: B₂O₃-SiO₂; alumino silicates of oxides of one or more of: Be, Ca, Ba, Sr, and combinations thereof; alumino silicates of oxides of one or more of: La, Ce, Pr, Nd, Pm, Sm, Eu, Gd, Tb, Dy, Ho, Er, Tm, Yb, Lu, Y, and combinations thereof; and, combinations thereof.

In further examples of the present disclosure, including further examples of the above , disposing the partially densified ceramic matrix composite further comprises enclosing the partially densified ceramic matrix composite within an enclosure prior to disposing the partially densified ceramic matrix composite within the opening.

In further examples of the present disclosure, including further examples of the above, disposing the partially densified ceramic matrix composite further comprises placing the partially densified ceramic matrix composite in contact with a fixture and disposing the partially densified ceramic matrix composite and the fixture within the opening.

In further examples of the present disclosure, including further examples of the above, the vessel comprises one or more of the following: graphite, aluminum oxide, silicon oxide, and combinations thereof.

In further examples of the present disclosure, including further examples of the above, generating the inert atmosphere comprises evacuating the chamber of the furnace to form a vacuum.

In further examples of the present disclosure, including further examples of the above, generating the inert atmosphere comprises filling the chamber with an inert gas.

In further examples of the present disclosure, including further examples of the above, generating the inert atmosphere comprises: evacuating the chamber to form a vacuum; and backfilling the chamber with an inert gas.

In still yet another aspect, which the Applicant also expressly reserves the right to claim independently, the present disclosure is directed to a ceramic matrix composite fabricated according to a process comprising the following steps: disposing in a chamber of a thermal processing apparatus a partially densified ceramic matrix composite comprising a ceramic matrix including at least silicon carbide and at least one oxide phase precursor; introducing at least one gas into the thermal processing apparatus; elevating a temperature of the chamber to cause a reaction between the silicon carbide and the least one gas; achieving a chemical equilibrium of the gases within the chamber; identifying a gas regime for minimizing the liberation of SiO and SiO₂; maintaining a temperature and CO₂:CO ratio of the identified gas regime within the chamber; and melt-infiltrating the partially densified ceramic matrix composite with the at least one oxide phase precursor to form a molten oxide ceramic matrix composite comprising a matrix including a silicon carbide phase and an oxide phase.

In further examples of the present disclosure, including further examples of the above, the at least one oxide phase precursor comprises one or more of the following: B₂O₃-SiO₂; AEO-Al₂O₃-SiO₂, where AE comprises at least one of Be, Ca, Ba and Sr; REO-Al₂O₃-SiO₂, where RE comprises at least one of La, Ce, Pr, Nd, Pm, Sm, Eu, Gd, Tb, Dy, Ho, Er, Tm, Yb, Lu and Y; and, combinations thereof.

In further examples of the present disclosure, including further examples of the above, the oxide phase includes an oxide crystalline structure comprising at least two of the following oxides, alumino silicates or both oxides and alumino silicates: B₂O₃-SiO₂; alumino silicates of oxides of one or more of: Be, Ca, Ba, Sr, and combinations thereof; alumino silicates of oxides of one or more of: La, Ce, Pr, Nd, Pm, Sm, Eu, Gd, Tb, Dy, Ho, Er, Tm, Yb, Lu, Y, and combinations thereof; and, combinations thereof.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 is a flowchart setting forth an exemplary process for melt-infiltrating ceramic matrix composites.
FIG. 2 is a flowchart setting forth another exemplary process for melt-infiltrating ceramic matrix composites.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by volume percent (vol. %.) based on a total volume of the composition unless otherwise indicated.

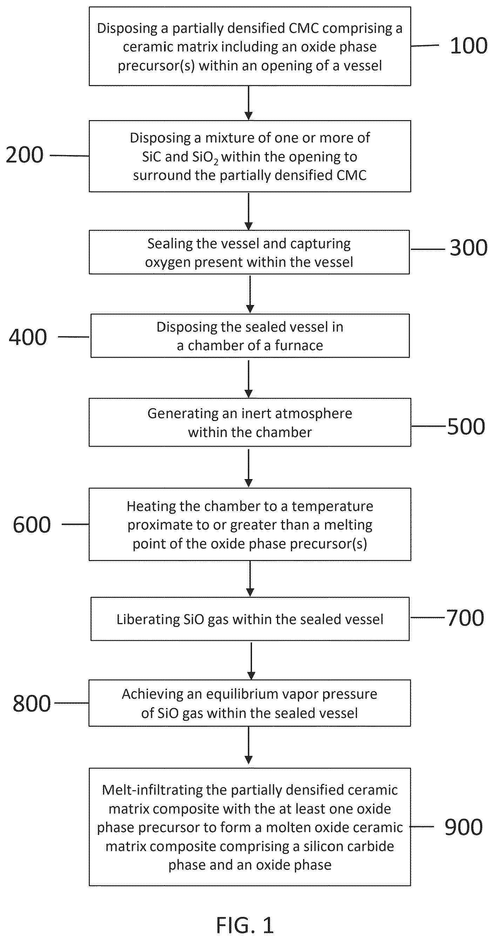

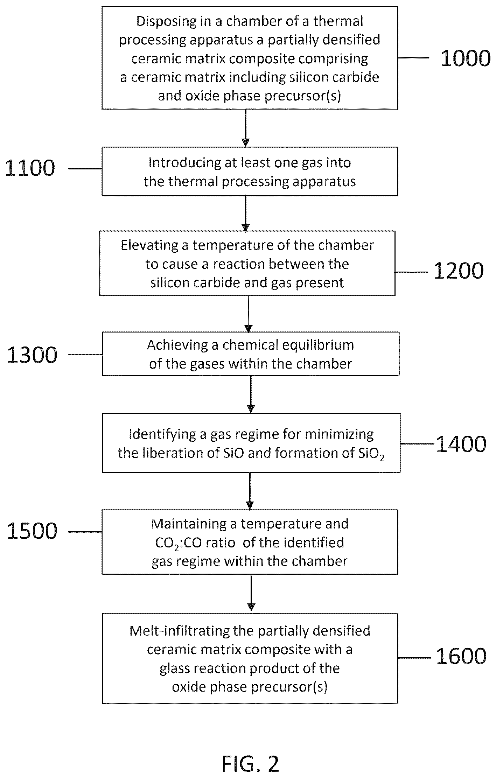

The present disclosure is directed to a technique for melt-infiltrating an oxide into a ceramic matrix composite and fabricating a molten oxide ceramic matrix composite comprising a silicon carbide phase and an oxide phase. In at least one embodiment, one or more precursor(s) of the oxide phase constituents may include, but are not limited to, glasses such as magnesium oxide, aluminum oxide, and/or silicon dioxide, combinations thereof, and the like. In at least one other embodiment, solid oxide particles, e.g., Al₂O₃, MgO, and the like, may be introduced, e.g., via slurry infiltration, prior to melt-infiltration taking place. The solid oxide particles may be slurry infiltrated into at least one pore and/or porous network of the partially densified ceramic matrix composite and achieve a particle loading amount of approximately 50 vol.% solid oxide material therein. Afterwards, when performing a melt-infiltration technique, the molten oxide formed may flow into the pores and/or porous network and dissolve the solid oxide material. The dissolution of the solid oxide material, e.g., Al₂O₃, into the molten oxide may shift the composition of the new molten oxide formed. The new molten oxide may favor nucleation of crystalline phases under the processing conditions or subsequent thermal treatments. The composition of the initial molten oxide, the composition and concentration of the solid oxide in the resultant molten oxide ceramic matrix composite and the thermal history may be selected to drive the creation of a solid oxide matrix with thermal stability at temperatures greater than 2,500°F. In at least one other embodiment, the aforementioned oxide phrase precursors of the glasses may be applied to the preform in a molten state and flowed into the composite using either one of the exemplary processes disclosed below and shown in the flowcharts of FIGS. 1 and 2.

Referring now to FIG. 1, an exemplary process for melt-infiltrating an oxide (MI-oxide) into a partially densified ceramic matrix composite to fabricate a molten oxide ceramic matrix composite is shown. As used herein, a "partially densified ceramic matrix composite" or "partially densified CMC" refers to a coated substrate or preform that includes a SiC coating layer that facilitates rigidization of the coated substrate or preform. In at least one embodiment, the partially densified ceramic matrix composite may also include interface coating materials applied to the fibers and/or fiber tows after having been woven into a substrate or preform.

At an exemplary step 100 of FIG. 1, the partially densified ceramic matrix composite comprising a ceramic matrix including at least one oxide phase precursor may be disposed within an opening of a vessel. The vessel may comprise a material(s) capable of withstanding the operating temperatures disclosed herein and not reacting with the contents therein. Suitable vessel materials may include, but are not limited to, graphite; silicon dioxide (e.g., at operating temperatures below 2,500°F (1371 °C)); aluminum oxide; combinations thereof, and the like. In at least one embodiment, the interior surface of the vessel may have a protective coating disposed thereupon to ensure a reaction may not occur between the material of the vessel and the contents of the vessel. Suitable protective coating materials may include, but are not limited to, boron nitride, silicon carbide, yttrium oxide, refractory metals, combinations thereof, and the like. In at least one other embodiment, the protective coating material may be oxidized so as to further ensure the aforementioned reaction may not occur. For example, a suitable protective coating material may include silicon carbide having an oxidized layer formed thereupon. Suitable oxide phase precursors may include, but are not limited to, alkaline earth metal alumino silicates, rare earth alumino silicates, boro-silicates (B₂O₃-SiO₂), combinations thereof, and the like. Suitable rare earth metal alumino silicates may include, but are not limited to, AEO-Al₂O₃-SiO₂, where AE = Be, Ca, Ba and Sr. Suitable rare earth alumino silicates may include, but are not limited to, REO-Al₂O₃-SiO₂, where RE = La, Ce, Pr, Nd, Pm, Sm, Eu, Gd, Tb, Dy, Ho, Er, Tm, Yb, Lu and Y. In at least one embodiment, the partially densified ceramic matrix composite may be enclosed in an enclosure material prior to being disposed within the opening. Suitable enclosure materials may comprise any metal exhibiting and possessing a melting point greater than 2,700°F and does not appreciably vaporize at the melt-infiltrating operating temperature may be utilized. Suitable metals may include, but are not limited to, refractory metals such as molybdenum, tungsten and tantalum; alloys such as, titanium-zirconium-molybdenum; combinations thereof, and the like. In at least one other embodiment, the partially densified ceramic matrix composite may not be disposed in an enclosure, but rather disposed on a fixture. The partially densified ceramic matrix composite may be placed in contact with a fixture comprising, e.g., silicon carbide, combinations, thereof, and the like. More particularly, the partially densified ceramic matrix composite(s) may be arranged on or even secured to the fixture. Next, at an exemplary step 200, a mixture of silicon carbide and at least one of silicon dioxide or silicon may be disposed within the opening to surround either the enclosure or the partially densified ceramic matrix composite disposed on a fixture. Once either the enclosure or the partially densified ceramic matrix composite is packed within the mixture, the vessel may be sealed at an exemplary step 300. While sealing the vessel, any oxygen present within the vessel may be captured by the high surface area powders of the ceramic matrix and the mixture.

Next, at an exemplary step 400, the sealed vessel may be placed in a chamber of a furnace. Suitable furnaces may include, but are not limited to, any furnace capable of generating and maintaining an atmosphere that is compatible with, and not reactive with, the aforementioned materials of the vessel discussed above. Next, at an exemplary step 500, an inert atmosphere may be generated within the chamber. In at least one embodiment, the chamber of the suitable furnace may be evacuated to form a vacuum. In at least one other embodiment, the chamber of the suitable furnace may be filled with an inert gas. In yet at least other embodiment, the chamber of the suitable furnace may be evacuated and then backfilled with an inert gas. Any inert gas may be suitable for use herein when carrying out either the filling or the backfilling steps. Next, at an exemplary step 600, the chamber may be heated to a temperature proximate to or greater than a melting point of the aforementioned oxide phase precursor(s). Once the oxide phase precursor(s) begins melting, SiO gas may begin liberating within the sealed vessel at an exemplary step 700. Next, at an exemplary step 800, an equilibrium vapor pressure of SiO gas may be achieved within the sealed vessel. The achieved SiO equilibrium vapor pressure may prevent reduction and/or degradation of the SiC in the partially densified ceramic matrix composite.

Next, at an exemplary step 900, the oxide phase precursor(s) may begin reacting and forming a molten oxide and, more specifically, a glass. The molten oxide may infiltrate the pores and/or porous network within and throughout the partially densified ceramic matrix composite to form a molten oxide ceramic matrix composite. The aforementioned SiO equilibrium vapor pressure may ensure the infiltrant, e.g., magnesium aluminosilicate glass or molten oxide, is not pushed out of the partially densified ceramic matrix composite during melt-infiltration. Pushing out the infiltrant results in a mass loss for the resultant molten oxide ceramic matrix composite. Likewise, the aforementioned SiO equilibrium vapor pressure also may ensure bubbles do not form within the infiltrant that begins occupying the pores and/or porous network within and throughout the partially densified ceramic matrix composite. In carrying out the exemplary process of FIG. 1, a ratio of the amount of silicon dioxide powder in the mixture to the amount of silicon carbide in the mixture may influence positively the formation of SiO gas needed to achieve the aforementioned SiO equilibrium vapor pressure within the vessel during the melt-infiltration step. The resultant matrix of the molten oxide ceramic matrix composite may comprise a silicon carbide phase and an oxide phase. In at least one embodiment, the resultant oxide phase includes at least two of cordierite, mullite, sapphirine, spinel, alumina, periclase, and forsterite.

Referring now to FIG. 2, another exemplary process for melt-infiltrating an oxide (MI-oxide) into a partially densified ceramic matrix composite and fabricating a molten oxide ceramic matrix composite is shown. In contrast to the other exemplary process shown in FIG. 1, the exemplary process shown in FIG. 2 eliminates the need and use of the packing tools and consumable powders mentioned above. Instead, thermal process equipment that does not contain carbon may be used to achieve a desired reaction atmosphere suitable for melt-infiltrating an oxide without degrading the partially densified ceramic matrix composite. At an exemplary step 1000, at least one partially densified ceramic matrix composite may be disposed within a chamber of the thermal processing apparatus. The partially densified ceramic matrix composite may comprise a ceramic matrix that includes silicon carbide and one or more of the oxide phase precursors discussed above. Next, at an exemplary step 1100, a gas may be introduced into the chamber of the thermal processing apparatus. In at least one embodiment, the gas may include, but is not limited to, a single gas or a mixture of gases from at least one of the following: carbon monoxide, carbon dioxide, and the like.

Next, at an exemplary step 1200, a temperature of the chamber may be elevated to a value or range capable of causing a reaction between the silicon carbide of the partially densified ceramic matrix composite and the gas(es) within the chamber. The nature of the reaction may depend on the composition of the gas(es) within the chamber. Next, at an exemplary step 1300, the gases present may interact with each other until forming and achieving a chemical equilibrium. Based on the chemical equilibrium achieved, the thermodynamics of the chemical equilibrium may permit the setting of gas regimes. Potential gas regimes may include, but are not limited to, gases that have different effective oxygen activities or propensity of oxygen to react with substances, e.g., silicon carbide, within the atmosphere of the chamber. In at least one embodiment, the potential gas regimes may include, but are not limited to, carbon monoxide, carbon dioxide, combinations thereof, and the like.

The amount of activity within the atmosphere of the chamber may depend on both the temperature(s) of and ratio(s) of the gas regimes present. For example, when plotting a relationship between temperature and, e.g., a CO₂:CO ratio on oxygen partial pressure, a regime of gas mixtures and temperatures may be identified that may correspond to a minimization of the amount of SiO liberated from the silicon carbide and SiO₂ liberated by the glass formed during melt-infiltration of the molten oxide and reaction of the oxide phase precursor(s). With this knowledge in mind, at an exemplary step 1400, the gas regime for minimizing liberation of SiO and SiO₂ may be identified. And, at an exemplary step 1500, the corresponding temperature range and CO₂:CO ratio on oxygen partial pressure of the identified gas regime may be maintained within the chamber. Lastly, at an exemplary step 1600, the molten oxide, e.g., glass, may begin infiltrating the pores and/or porous network within and throughout the partially densified ceramic matrix composite to form a molten oxide ceramic matrix composite.

In at least one embodiment, the potential gas regime may exhibit and possess an interval having a temperature range of approximately 1,400°C to approximately 1,500°C and a CO₂:CO ratio on oxygen partial pressure of approximately 0.50 to approximately 0.91: approximately 0.50 to approximately 0.90, and the oxygen partial pressure may be approximately -7 log(pO₂) atm (0.01 Pa) to approximately -8 log(pO₂) atm (0.001 Pa) . If the oxygen partial pressure becomes lower, then the vapor pressure of the SiO gas becomes higher. When subjected to elevated temperatures within a high pressure O₂ atmosphere of the chamber, an SiO₂ scale may form on the SiC present within the partially densified ceramic matrix composite and begin migrating through the SiC. SiO₂ growth on SiC may occur under certain conditions with a rapid growth rate, especially if the SiO₂ dissolves into a slag with high oxygen permeability. If a glass is also present within the partially densified ceramic matrix composite, the migrating SiO₂ may migrate more quickly and the O₂ present may migrate into the partially densified ceramic matrix and quickly react with the SiC present. The identified gas regime temperature range may serve to decrease the vapor pressure of the SiO gas; decrease the amount of SiO₂ scale that may grow on the SiC present. In addition, the ratio of CO₂:CO may exhibit and possess an intermediate oxygen potential that may limits both aforementioned reactions.

In at least one embodiment, the molten oxide ceramic matrix composite may include woven fibers or fiber tows, e.g., silicon carbide fibers, coated with an interface coating material, e.g., silicon carbide, enveloped in a matrix comprising approximately 10 to approximately 30 % by volume of a silicon carbide phase and approximately 20 to approximately 60 % by volume of an oxide phase. Based on the aforementioned oxide phase precursor materials mentioned above, the oxide phase may include, but is not limited to, an oxide crystalline structure comprising at least two of the following oxides, alumino silicates or both oxides and alumino silicates: B₂O₃-SiO₂; alumino silicates of oxides of one or more of: Be, Ca, Ba, Sr, and combinations thereof; alumino silicates of oxides of one or more of: La, Ce, Pr, Nd, Pm, Sm, Eu, Gd, Tb, Dy, Ho, Er, Tm, Yb, Lu, Y, and combinations thereof; and, combinations thereof. For example, in at least one embodiment, the oxide phase may include cordierite, mullite, and sapphirine in an amount of at least approximately 75% by volume. In at least one other embodiment, the oxide phase may be present in an amount of at least approximately 75% by volume of the molten oxide ceramic matrix composite and silicon carbide present in an amount of approximately 10 to approximately 20% by volume of the molten oxide ceramic matrix composite. In yet at least one other embodiment, the oxide phase includes about 33 mol. % MgO, about 19 mol. % AlO_{1.5}, and about 44 mol. % SiO₂. In still yet at least other embodiment, the oxide phase may include, but is not limited to, a series of molten glasses each comprising MgO, AlO_{1.5}, and SiO₂ but each having a different eutectic point. As a result, the oxide phase may comprise at least two of the following: cordierite, mullite, sapphirine, spinel, alumina, periclase, and forsterite.

The aforementioned exemplary processes may be utilizing when melt-infiltrating an oxide into a ceramic matrix composite. In turn, the resultant molten oxide ceramic matrix composite may be utilized to construct various gas turbine engine components for use in various gas turbine engines.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A process for melt-infiltrating a partially densified ceramic matrix composite, comprising the steps of:
disposing a partially densified ceramic matrix composite comprising a ceramic matrix including at least one oxide phase precursor within an opening of a vessel;
disposing a mixture of one or more of silicon carbide and silicon dioxide within the opening to surround the partially densified ceramic matrix composite;
sealing the vessel and capturing oxygen gas present within the vessel;
disposing the sealed vessel in a chamber of a furnace;
generating an inert atmosphere within the chamber;
heating the chamber to a temperature proximate to or greater than a melting point of the at least one oxide phase precursor;
liberating SiO gas within the sealed vessel;
achieving an equilibrium vapor pressure of SiO gas within the sealed vessel; and,
melt-infiltrating the partially densified ceramic matrix composite with the at least one oxide phase precursor to form a molten oxide ceramic matrix composite comprising a silicon carbide phase and an oxide phase.

2. The process of claim 1, wherein disposing the partially densified ceramic matrix composite further comprises enclosing the partially densified ceramic matrix composite within an enclosure prior to disposing the partially densified ceramic matrix composite within the opening.

3. The process of claim 1, wherein disposing the partially densified ceramic matrix composite further comprises placing the partially densified ceramic matrix composite in contact with a fixture and disposing the partially densified ceramic matrix composite and the fixture within the opening.

4. The process of any preceding claim, wherein the vessel comprises one or more of the following: graphite, aluminum oxide, silicon oxide, silicon carbide, and combinations thereof.

5. The process of any preceding claim, wherein generating the inert atmosphere comprises evacuating the chamber of the furnace to form a vacuum.

6. The process of any of claims 1 to 4, wherein generating the inert atmosphere comprises filling the chamber with an inert gas.

7. The process of any of claims 1 to 4, wherein generating the inert atmosphere comprises:
evacuating the chamber to form a vacuum; and
backfilling the chamber with an inert gas.

8. A process for melt-infiltrating a partially densified ceramic matrix composite, comprising the steps of:
disposing in a chamber of a thermal processing apparatus a partially densified ceramic matrix composite comprising a ceramic matrix including at least silicon carbide and at least one oxide phase precursor;
introducing at least one gas into the thermal processing apparatus;
elevating a temperature of the chamber to cause a reaction between the silicon carbide and the least one gas;
achieving a chemical equilibrium of the gases within the chamber;
identifying a gas regime for minimizing the liberation of SiO and formation of SiO₂;
maintaining a temperature and CO₂:CO ratio of the identified gas regime within the chamber; and
melt-infiltrating the partially densified ceramic matrix composite with the at least one oxide phase precursor to form a molten oxide ceramic matrix composite comprising a matrix including a silicon carbide phase and an oxide phase.

9. The process of any preceding claim, wherein the at least one oxide phase precursor comprises one or more of the following: B₂O₃-SiO₂; AEO-Al₂O₃-SiO₂, where AE comprises at least one of Be, Ca, Ba and Sr; REO-Al₂O₃-SiO₂, where RE comprises at least one of La, Ce, Pr, Nd, Pm, Sm, Eu, Gd, Tb, Dy, Ho, Er, Tm, Yb, Lu and Y; and, combinations thereof.

10. The process of any preceding claim, wherein the oxide phase includes an oxide crystalline structure comprising at least two of the following oxides, alumino silicates or both oxides and alumino silicates: B₂O₃-SiO₂; alumino silicates of oxides of one or more of: Be, Ca, Ba, Sr, and combinations thereof; alumino silicates of oxides of one or more of: La, Ce, Pr, Nd, Pm, Sm, Eu, Gd, Tb, Dy, Ho, Er, Tm, Yb, Lu, Y, and combinations thereof; and, combinations thereof.

11. A ceramic matrix composite fabricated according to the process of any preceding claim.
